# EUROPEAN PATENT APPLICATION

(11) **EP 4 679 873 A1**
(43) Date of publication of application: **14.01.2026**
(21) Application number: 24306145.4
(22) Date of filing: 08.07.2024
(51) Int. Cl.: H04W 12/04, H04W 8/26, H04W 12/06, H04W 12/069, H04W 12/30, H04W 12/40

(54) **REMOTE PROVISIONING OF CREDENTIALS REQUIRED FOR REMOTE SIM PROVISIONING**

(71) Applicant: THALES DIS FRANCE SAS, 92190 Meudon (FR)
(72) Inventor: LELOUP, Laurent, 13124 PEYPIN (FR); LEPAVEC, Emmanuel, 75017 PARIS (FR); BROLH, Abraham, 92400 COURBEVOIE (FR)
(74) Representative: Lotaut, Yacine Diaw

(57) **Abstract**

A method for obtaining credentials required for Remote Subscriber Identify Module Provisioning, RSP, of a secure element cooperating with a terminal, the method comprising:
- sending (202), by the secure element via a telecommunication interface of the terminal, a request to a first remote server on a signaling channel of a mobile network;
- receiving (209), by the secure element, a temporary subscriber identity after sending of the request;
- obtaining (211; 215) said credentials, wherein at least one of the credentials is obtained from a second remote server, using the temporary subscriber identity ;
- requesting (217), from a subscription manager server, a subscriber profile associated with a permanent subscriber identity, using RSP based on said obtained credentials.

## Description

### FIELD OF USE

The present disclosure relates to telecommunications and concerns in particular a method for a remote provisioning of credentials required for Remote Subscriber Identity Module, SIM, Provisioning, noted RSP in what follows, of a secure element.

### BACKGROUND

Secure elements can be integrated in terminals (mobile user terminal, Internet of Things terminal, etc) to allow secure access to a mobile network based on a radiocommunication technology, using a subscription profile stored in the secure element.

Such secure elements are generally referred to as Universal Integrated Circuit Card, UICC. UICCs have strongly evolved over the last decades. UICCs were originally in the form of physical cards that can be inserted and removed from terminals having a slot designed to receive the UICC.

More recently, a new form of UICC emerged as eUICC (embedded UICC), which is surface mounted in the terminal in a factory and in which an eSIM is virtualized.

An iUICC (integrated UICC) is a new form factor of eUICC, which is permanently integrated in the chip of a terminal, being therefore part of the operating system of the terminal (whereas the eUICC is a discrete component distinct from the chip of the terminal).

When these new forms of UICC are integrated or embedded in a terminal, they may not natively include a subscription profile, as these can generally be obtained by the user of the terminal once the terminal is commissioned for the first time. To this end, Remote SIM Provisioning (RSP) is a service that allows to remotely download a subscription profile in a secure element such as an eUICC or iUICC.

To obtain a subscription profile using RSP, secure elements such as eUICC and iUICC have to store specific credentials in a security domain, named ECASD, for eUICC Controlling Authority Security Domain. An ECASD provides secure storage of credentials and security functions for key establishment and eUICC authentication.

These credentials are named ECASD credentials or RSP credentials in what follows.

These credentials are described in the GSMA specification *"*SGP.02, Remote Provisioning Architecture for Embedded UICC Technical Specification", Version 4.0 25 , February 2019. (as well as the GSMA SGP.22 (Consumer) and SGP.32 (IoT) standards), and comprise ECASD keys and certificates.

These credentials mainly comprise:
- a private key of the secure element for creating signatures, also called SK.EUICC.ECDSA in the specification, and associated with a public key of the secure element;
- a certificate, also called in the GSMA specification CERT.EUICC.ECDSA;
- a public key of the secure element manufacturer (EUM), part of the also called in the GSMA specifications PK.EUM.ECDSA;
- a public key of the Certification Issuer (the GSMA for example), also called in the GSMA specifications PK.CI.ECDSA.

Therefore, these RSP credentials are sensitive data to be provisioned to the secure element of a terminal. To ensure a high level of security during provisioning of the RSP credentials, it is necessary (and required by the GSMA specification), to load the RSP credentials in a certified and secure environment, which is named SAS-UP, which stands for Security Accreditation Scheme for UICC Production.

For an eUICC, the EUM may load the RSP credentials in their own factory. However, the factory has to be a certified and secure environment, to ensure a sufficient level of security during loading of the RSP credentials in the eUICC.

However, for iUICC, a chip manufacturer is in charge of manufacturing the chip of the terminal, in which the secure element, prepared by the EUM, is loaded in the terminal by a terminal manufacturer, which can be an OEM (Original Equipment Manufacturer) or ODM (Original Designed Manufacturer).

The RSP credentials can therefore be loaded at different sites, with the following drawbacks and constraints:
- at the chip manufacturer site, after being obtained from the EUM. It however requires the chip manufacturer site to be a certified and secure environment (SAS-UP for example), and it requires the chip manufacturer to create a dedicated reference for each EUM, and therefore to have separate Stock Keeping Units for the different EUM (although the manufactured chip can be the same), which leads to high constraints in terms of supply chain; or
- at the device manufacturer (OEM or ODM) site. It however requires a certified and secure environment for all the device manufacturers (which can be numerous for a given terminal), which makes it an unrealistic solution.

To solve this issue, the GSMA created a specific process, called 2-step personalization, which consists in:
- 1^{st} step: loading a unique secure cryptographic key on each chip at the chip manufacturer site;- 2^{nd} step: use the unique secure cryptographic key to bind the RSP credentials to a specific chip during data preparation of RSP credentials at the EUM. The RSP credentials can then only be loaded on the chip having the unique secure cryptographic key, at the OEM/ODM site.

Thanks to the additional security allowed by this cryptographic binding, the loading of the RSP credentials inside the chip can be done in a non-secured environment, which avoids the need to have a certified and secure environment at the OEM site.

However, the 2-step personalization has the following drawbacks. The cryptographic binding means that the data preparator (the EUM) knows the unique secure cryptographic key for each chip, necessary for loading the RSP credentials specific to this chip. This implies to ensure traceability of the unique secure cryptographic keys.

According to a first option, the traceability of the unique secure cryptographic keys is ensured by the chip manufacturer and these information are communicated to the OEM/ODM, which forwards these information to the EUM for generating the RSP credentials that are bound with the right cryptographic keys. However, this requires the chip manufacturer to have differentiated stocks for each OEM/ODM and to maintain a listing, for each stock, of the associated unique secure cryptographic keys.

According to a second option, during manufacturing of a terminal at the OEM site, when a chip is mounted in a terminal, the unique secure cryptographic key of the chip is retrieved, and communicated to the remote EUM, for preparing RSP credentials bound with the unique secure cryptographic key of the chip. The RSP credentials are returned to the OEM site by the EUM, then loaded in the chip using the unique secure cryptographic key of the chip. However, for security reasons, most of the OEM sites are not equipped with an internet connection that would allow them to contact the EUM is real time to obtain the RSP credentials. In addition, this solution would slow down the production at the OEM/ODM site.

Therefore, for eUICC, the provision of RSP credentials implies a certified and secure environment at several sites. For iUICC, the constraints are even more stronger, as several sites need to have a certified and secure environment (EUM and OEM/ODM sites). The 2-step personalization solves this issue for iUICC, but requires a complex traceability of the chips and associated unique secure cryptographic keys, which leads to strong constraints for the whole production chain (chip manufacturer, OEM/ODM and EUM).

Therefore, there is a need to facilitate the secure provision of RSP credentials to a secure element of a terminal, in particular to an eUICC or iUICC.

### SUMMARY

A first aspect of the disclosure concerns a method for obtaining credentials required for Remote Subscriber Identify Module Provisioning, RSP, of a secure element cooperating with a terminal, the method comprising:
- sending, by the secure element via a telecommunication interface of the terminal, a request to a first remote server, on a signaling channel of a mobile network;
- receiving, by the secure element, a temporary subscriber identity after sending of the request;
- obtaining said credentials, wherein at least one of the credentials is obtained from a second remote server, using the temporary subscriber identity;
- requesting, from a subscription manager server, a subscriber profile associated with a permanent subscriber identity, using RSP based on said obtained credentials.

The disclosure therefore allows a remote provisioning of the credentials necessary for Remote SIM Provisioning, called RSP credentials. The RSP credentials therefore do not have to be pre-stored in the secure element during manufacturing of the terminal, and the constraints identified in the prior art are therefore avoided. In addition, the remote provisioning of the RSP credentials is based on a temporary subscriber identity, which is requested by the secure element using a signaling channel of a mobile network. The method can therefore be implemented without the need for the OEM/ODM to pre-store the temporary subscriber identity in the secure element (which would require to pre-contract with a given mobile network operator). The use of the signaling channel enables to transmit the request via any mobile network, so the disclosure can be implemented in any terminal location.

According to some embodiments, the request may be sent to the first remote server using an ephemeral subscriber identity and the secure element may randomly select the ephemeral subscriber identity in a predetermined set of ephemeral subscriber identities.

Such an ephemeral subscriber identity allows the secure element to communicate with the first server using a signaling channel of the first mobile network. This allows several secure elements mounted in several terminals to use the same set of ephemeral subscriber identities to obtain the temporary subscriber identity, and then to obtain the RSP credentials required for RSP.

According to some embodiments, in response to the request, the secure element may receive a unique identifier request from the first remote server, the secure element may transmit a unique identifier associated with the secure element to the first remote server, and the temporary subscriber identity may be received from the first remote server after transmission of the unique identifier.

This enables the first remote server to verify that the secure element is authorized to receive the temporary subscriber identity, and/or to determine the temporary subscriber identity based on the unique identifier. This also allows the first remote server to store the unique identifier in association with the attributed temporary identifier.

According to some embodiments, the credentials may comprise a pair of cryptographic keys associated with the secure element and a certificate, and the certificate may be generated by the second server and received by the secure element from the second server.

The pair of cryptographic keys may be the keys SK.EUICC.ECDSA and PK.EUICC.ECDSA and the certificate may be CERT.EUICC.ECDSA, as described in the GSMA specifications. This enables to ensure a secure remote provisioning of a subscription profile, by establishing a secure communication channel with the subscription manager server.

In complement, the pair of cryptographic keys may be generated by the secure element and comprises a private key and a public key.

This enables to locally generate the RSP secret key, which does not need to be communicated outside of the secure element. The private key can be stored in the ECASD of the secure element, which is an eUICC or an iUICC according to the disclosure.

Sill in complement, the generated public key may be transmitted to the second remote server to obtain the certificate, and the certificate may be encrypted by the second remote server using the public key associated with the secure element.

Therefore, the certificate can be trusted as it is signed by an authority associated with the second remote server. This enables the subscription manager server to verify that the RSP credentials have been validated by a trusted authority.

According to some embodiments of the disclosure, the temporary subscriber identity may be valid during a first period.

This enables the temporary subscriber identity to be chosen among a defined set of temporary subscriber identities which can be attributed to a great number of secure elements, provided the secure elements are not commissioned simultaneously. Indeed, a secure element of a terminal can receive a first temporary subscriber identity, and, after expiration of the first period, the same first temporary subscriber identity can be attributed to another secure element of another terminal.

In complement, the ephemeral subscriber identity may be valid during a second period, the second period being shorter than the first period.

As the ephemeral subscriber identity is only used to obtain the temporary subscriber identity, it can be advantageously short. Such a short duration also allows the ephemeral subscriber identities to be used by a great number of secure elements mounted in different terminals.

According to a first embodiment, the secure element may be an integrated Universal Integrated Circuit Card, iUICC.

Aspects of the disclosure are particularly advantageous in the context of an iUICC because the provisioning of the RSP credentials for iUICC raises many constraints in the prior art, as previously described. The first embodiment enables to avoid the 2-step personalization process, without requesting a certified and secure environment of several manufacturers during manufacturing of the terminal.

Alternatively, according to a second embodiment, the secure element may be an embedded Universal Integrated Circuit Card, eUICC.

Aspects of the disclosure are also advantageous for remote provisioning of RSP credentials in an eUICC, because it avoids the need to provision the RSP credentials during manufacturing, in a certified and secure environment.

A second aspect of the disclosure concerns a secure element arranged to cooperate with a terminal, the secure element being configured for:
- sending a request to a first remote server on a signaling channel of a mobile network;
   - receiving a temporary subscriber identity after sending of the request;
- obtaining credentials required for Remote Subscriber Identify Module Provisioning, RSP, wherein the secure element is configured to obtain at least one of the credentials from a second remote server, using the temporary subscriber identity;
   - requesting, from a subscription manager server, a subscriber profile associated with a permanent subscriber identity, using RSP based on said obtained credentials.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

[Fig. 1] shows a system for obtaining credentials required for RSP of a secure element cooperating with a terminal, according to some embodiments of the disclosure;
[Fig. 2] is a flowchart illustrating the steps of a method for obtaining credentials required for RSP of a secure element cooperating with a terminal, according to some embodiments of the disclosure.

### DETAILED DESCRIPTION

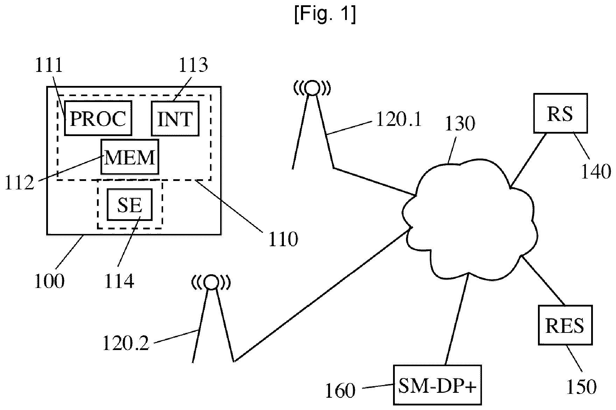

Figure 1 shows a system 10 for obtaining credentials required for RSP of a secure element 114 cooperating with a terminal 100, according to some embodiments of the disclosure;

No restriction is attached to the terminal 100, which can be a smartphone, a Personal Digital Assistant PDA, an Internet of Things, IoT, device, etc.

The terminal 100 comprises at least one telecommunication interface 113, which is configured for communicating wirelessly, via radio signals, with cellular mobile networks. As illustrated on figure 1, the telecommunication interface 113 may be configured to communicate:
- with a first base station 120.1 of a first mobile network of a first Mobile Network Operator, MNO;
- with a second base station 120.2 of a second mobile network 120.2 of a second MNO.

According to some embodiments of the disclosure, the first base station 120.1 and the second base station 120.2 are one and the same base station. According to some other embodiments of the disclosure, the first base station 120.1 and the second base station 120.2 are distinct, but they belong to the same mobile network of the same MNO: in that case the first and second mobile networks are one and the same network.

The terminal 100 further comprise a processing unit 111 and a memory 112. The processing unit 111 may comprise one or multiple microprocessors, a Central Processing Unit (CPU), Graphical Processing Unit (GPU), etc. No restriction is attached to the memory 102, which may be any non-transient, tangible form of memory. For example, it can comprise ROM, EEPROM and/or flash memory.

According to some embodiments, the processor 111, the memory 112, the interface 113 and the secure element 114 are integrated in a System on a Chip, SoC 110. The terminal 100 may comprise other components, that are not shown on figure 1, such as a graphical user interface, a battery, etc. These components depend on the functionalities that are performed by the terminal 100.

The secure element 114 according to the disclosure is an embedded UICC, eUICC, or an integrated UICC, iUICC.

According to a first embodiment, the secure element 114 is an iUICC. According to a second embodiment, the secure element 114 is an eUICC.

As previously explained, compared to traditional SIM cards consisting of an integrated circuit located on a UICC that can be manually inserted into a terminal, an eSIM is a virtualized subscriber identity profile installed onto an eUICC chip (the secure element 114 according to the second embodiment), which is surface mounted in the terminal 100 in a factory. The eUICC can therefore be mounted inside the terminal 100, but external to the SoC 110, and forming a discrete component.

An iUICC (the secure element 114 according to the first embodiment) is a new form factor of UICC, which is permanently integrated in the SoC 110 of the terminal 100, being part of operating system of the terminal. In the first embodiment, the secure element 114 can therefore be considered as a part of the processing unit 111 and of the memory 112: the iUICC is therefore not a discrete UICC but is part of the SoC 110.

The SoC 110 of the terminal 100 is configured for executing operations that are coded in the form of instructions in the memory 112, so as to perform the functionalities of the terminal 100.

The system 10 according to the disclosure further comprises an extended network 130, such as an IP network 130, which can be accessed to by the terminal 100 via the first and second mobile networks.

The system 10 further comprise a first server 140, which is configured for providing a temporary subscriber identity, such as a temporary International Mobile Subscriber Identity, IMSI. A temporary IMSI is an IMSI, which validity expires after a first period (starting at the issuance of the temporary IMSI). The first period may be is less than one day for example, more specifically less than one hour. The temporary IMSI may be associated with network credentials that allow a secure element of a terminal to access to the second network via the second base station 120.2. Such network credentials may comprise cryptographic keys and/or certificate that allow to the second base station 120.2 to authenticate the secure element of the terminal based on the temporary IMSI, and to grant an access to the second mobile network, to the secure element having the network credentials.

The first server 140 may be dedicated to a service that provides a temporary IMSI to the secure element of a terminal when it is initialized (first time it is turned on by a user for example). Indeed, in the context of the disclosure, the terminal 100 may need to download data from a remote server, such as at least one ECASD credentials required for Remote SIM Provisioning, according to the disclosure.

This service of obtaining a temporary IMISI can be provided by a service provider. This avoids the need to pre-store an IMSI (temporary or permanent) in the terminal 100 or to connect the extended network 130 using an interface (Wifi for example) other than the telecommunication interface 113.

The first server 140 may store a plurality of temporary IMSI, which have been previously acquired by the service provider from the second MNO in charge of the second mobile network. A temporary IMSI can be issued to a first secure element of a first terminal, and then, upon expiration of the first period after issuance to the first secure element, it can be further attributed to a second secure element of a second terminal.

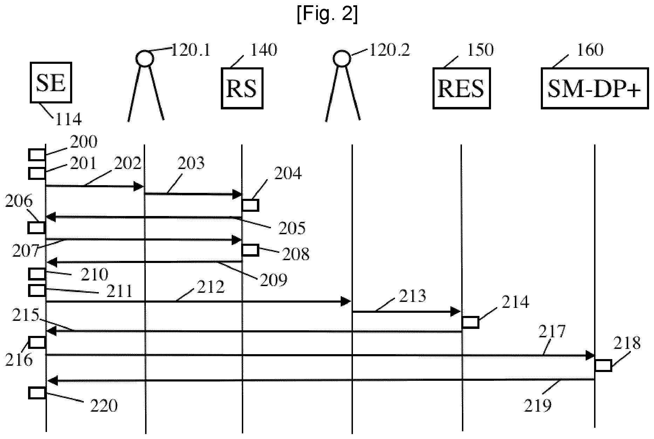

According to the disclosure, the secure element 114 (eUICC or iUICC) in the terminal 100 is generic and is not differentiated, which means that it is not associated with a permanent IMSI until RSP is performed. Thus, when the terminal 100 is turned on for the first time, no permanent IMSI is associated with the secure element 114. The ECASD credentials that are required to request a subscriber profile (a permanent IMSI) using RSP, named RSP credentials in what follows, are also not pre-stored in the secure element 114 during manufacturing of the terminal 100. Therefore, at the start of the method that is described hereafter referring to figure 2, the secure element 114 does not comprise all of the RSP credentials (comprises none of them or only some of them) that are required to obtain the permanent profile using RSP. The RSP credentials that are required to request subscriber profile using RSP may comprise:
- an RSP private key of the secure element for creating signatures, also called in the GSMA specifications SK.EUICC.ECDSA, associated with an RSP public key of the secure element, noted PK.EUICC.ECDSA ;
- an RSP certificate for the public key of the secure element, also called in the GSMA specifications CERT.EUICC.ECDSA.

According to the GSMA specifications mentioned above, the RSP credentials may further comprise:
- PK.EUM.ECSA, which is the public key of the secure element manufacturer, also called EUM, which can be part of a certificate CERT.EUM.ECDSA of the EUM, also called in the GSMA specifications PK.EUM.ECDSA;

- PK.CI.ECDSA, which is a public key of a Certification Issuer, CI, which is part of the certificate CERT.CI.ECDSA of the CI.

To summarize, the GSMA CI certificate will ensure that the EUM Certificates are valid, and the EUM Certificates will ensure that card certificates are valid.

The first server 140 can be accessed via the extended network 130.

The system 10 further comprises a second server 150, also called Remote Activation Server RAS 150 in what follows.

The RAS 150 is configured to receive a RSP credentials request from a secure element and to generate and transmit at least one RSP credential to the secure element. For example, the RSP credentials request may comprise the RSP public key PK.EUICC.ECDSA associated with the secure element of the requesting terminal, and may return the RSP certificate CERT.EUICC.ECDSA that can be signed by the RAS 150. The RSP certificate preferably indicates the RSP public key and a unique identifier of the secure element of the requesting terminal. This enables to avoid transmitting the RSP secret key SK.EUICC.ECDSA to the secure element, which can generate it locally, thereby reinforcing the security associated with the obtention of the RSP credentials by the secure element. Alternatively, the RES 150 generates and transmits the RSP public key PK.EUICC.ECDSA, the associated RSP secret key SK.EUICC.ECDSA, and the certificate CERT.EUICC.ECDSA. The RAS 150 can be a server of a terminal manufacturer. The RSP certificate can therefore be signed by a secret key of the terminal manufacturer. It is to be noted that the RAS 150 is not the CI; instead the RAS 150 is operated separately so that the RAS 150 can receive a Certificate Signing Request from the SE (containing PK.EUICC),and the RAS 150, which is the only entity in possession of SK.EUM, will then be able to sign PK.EUICC to create CERT.EUICC that will be sent back to the SE for storage.

The system 10 further comprises a subscription manager server 160, in charge of the RSP service. According to the GSMA specifications, the subscription manager server 160 can be a Subscription Manager Data Preparation Plus, SM-DP+, server of an MNO, which can be the first MNO, the second MNO or another MNO. The SM-DP+ server 160 is configured implement the RSP service by:
- receiving the RSP credentials from a secure element;
- authenticating the secure element based on the RSP credentials;
- transmitting a permanent subscription profile to the secure element, the permanent subscription profile identifying a permanent IMSI and attributing cryptographic keys and/or certificate that enable to permanently access to the mobile network of the MNO.

Figure 2 is a flowchart illustrating the steps of a method for obtaining credentials required for RSP of the secure element 114 cooperating with the terminal 100, according to some embodiments of the disclosure.

At step 200, the terminal 100 is initialized, after being commissioned for the first time or after being reinitialized. Before step 200, the secure element 114 has been installed (embedded or integrated) in the terminal 100.

At step 201, which is optional, the secure element 114 may determine an ephemeral IMSI. An ephemeral IMSI is an IMSI that is valid during a second period, which is short, such as less than one minute for example. According to the disclosure, the second period is shorter than the first period during which a temporary IMSI is valid.

No restriction is attached to the determination of the ephemeral IMSI by the secure element 114. For example, the ephemeral IMSI can be randomly selected in a predetermined set of ephemeral IMSI stored in the secure element 114. The predetermined set can be a predetermined interval of IMSI values, that can be stored in the secure element 114 during manufacturing. The predetermined set of ephemeral IMSI can be the same for all the secure elements of a same EUM or of a same terminal manufacture OEM/ODM. Indeed, the probability that two secure elements randomly select the same ephemeral IMSI at the same time (during overlapping second periods that are less than one minute) is extremely low, even more if the predetermined set of ephemeral IMSI is large (for example, it can comprise more than 1000 ephemeral IMSI).

At step 202, the secure element 114 transmits a request for a temporary IMSI intended to the first server 140, using the ephemeral IMSI and via a signaling/control uplink channel of the first base station 120.1 of the first mobile network. This technique is called data over signaling, or DoS. A signaling channel is used to transport control signals and is distinct from a data channel carrying user data. Making use of the signaling channel allows to transport small amount of signaling data and does not require a temporary or permanent subscription to the services of the first mobile network.

The request is received by the first base station 120.1 and forwarded to the first server 140 at step 203.

Upon reception of the request for a temporary IMSI at step 203, the first server 140 may generate a request for a unique identifier of the secure element 114 at step 204, and the request for a unique identifier is transmitted to the secure element at step 205 via the first base staton 120.1, the request being intended to the ephemeral IMSI.

At step 206, upon reception of the request for a unique identifier, the secure element 114 obtains a unique identifier associated with the secure element 114. In the second embodiment, in which the secure element 114 is an eUICC, the unique identifier, called EID, for Equipment IDentifier, is pre-stored in the secure element 114. In the first embodiment however, in which the secure element 114 is an iUICC, no unique identifier is attributed to the secure element 114 during manufacturing and upon loading of the secure element 114 in the SoC 110 of the terminal 100. Therefore, at step 206, in the second embodiment, a unique identifier can be randomly generated by the secure element 114. The unique identifier can be randomly generated according to a predefined format. The predefined format may be such that the probability to generate a unique identifier that is already associated with another secure element is extremely low. To this end, the unique identifier may comprise N digits, N being more than 15 for example, and preferably more than 20.

Alternatively, the unique identifier of the secure element 114 is the unique identifier of the terminal 100, as the secure element 115 is an iUICC or eUICC permanently associated with the terminal 100.

At a step 207, the unique identifier of the secure element 114, obtained at step 207, is transmitted to the first server 140 through a signaling channel of the first network (via the first base station 120.1).

Upon reception of the unique identifier of the secure element 114 at step 207, the first server 140 may store the unique identifier and may retrieve a temporary IMSI, at a step 208. As previously explained, the first server 140 may select the temporary IMSI among the plurality of temporary IMSI that are stored in the first server 140. For example, the retrieved temporary IMSI may be randomly selected among the stored plurality of temporary IMSI. Alternatively, the first server 140 may select the retrieved temporary IMSI based on the unique identifier of the secure element 114 and/or based on a location of the secure element 114. Retrieving the temporary IMSI comprises retrieving network credentials that allow a terminal to access to the second network, the network credentials comprising the network keys and a certificate delivered by the first server 140.

At a step 209, the first server 140 transmits the retrieved temporary IMSI (including the retrieved network keys and certificate) to the secure element 114.

Upon reception of the temporary IMSI at step 209, the secure element 114 stores the temporary IMSI at a step 210.

At a step 211, the secure element 114 generates a RSP credentials request, which has been previously described.

According to some embodiments, the RSP credentials request comprises the RSP public key PK.EUICC.ECDSA associated with the secure element 114, and the unique identifier of the secure element 114. The RSP credentials request can also be signed by the RSP private key PK.EUICC.ECDSA, associated with the secure element 114. To this end, according to these embodiments, the secure element 114 generates the RSP public key and the RSP secret key at step 211, before generating the RSP credentials request.

Alternatively, the secure element 114 does not generate the RSP public key and the RSP secret key at step 211, and the RSP credentials request only comprises the unique identifier of the secure element 114.

At step 212, the secure element 114 transmits the RSP credentials request, intended to the second server 150, to the second base station 120.2 and using the temporary IMSI received at step 209.

At step 213, the second base station 120.2 forwards the RSP credentials request to the second server 150.

At a step 214, the second server 150 obtains at least one RSP credential for the secure element 114 identified using the unique identifier. The second server 150 may also store the obtained RSP credentials in association with the unique identifier of the secure element 114.

In the embodiments in which the RSP credentials request comprise the RSP public key PK.EUICC.ECDSA of the secure element 114, the obtained at least one RSP credential is the RSP certificate signed by the second server 150. If the RSP credentials request is signed by the RSP private key of the secure element, the second server 150 may verify the signature using the RSP public key, to ensure that the secure element requesting the at least one RSP credential is the one possessing the RSP private key.

In the embodiments in which the RSP credentials request does not comprise any RSP credential, the obtained at least one RSP credential comprises the RSP public key, the RSP private key and the RSP certificate. In these embodiments, the RSP public key, the RSP private key and the RSP certificate are therefore generated by the second server 150. The RSP certificate may also comprise the RSP public key and is signed by the second server 150.

At a step 215, the obtained at least one credential is transmitted by the second server 150 to the secure element 114 via the second network.

At a step 216, the secure element 114 receives and stores the at least one RSP credential transmitted by the second server.

Therefore, the RSP credentials required for RSP are obtained by the secure element 114, without the need to be pre-stored in the secure element 114 during manufacturing of the terminal 100.

Therefore, at step 216, the secure element 114 stores all the RSP credentials that are required for RSP of a permanent subscription profile by the subscription manager server 160. The next steps 217 to 220 are therefore conforming to the RSP service.

At step 217, the secure element 114 sends a request for a subscription profile to the subscription manager server 160, the request for a subscription profile comprising the RSP certificate and being signed by the RSP private key.

At step 218, the subscription manager server 160 receives the request for a subscription profile and generates a permanent subscription profile, the permanent subscription profile comprising a permanent IMSI, network keys for accessing the mobile network associated with the subscription manager server 160, and a certificate signed by subscription manager server 160. Before generating the permanent subscription profile, the subscription manager server 160 can check the signature of the request for a subscription profile, using the RSP public key, and can check the RSP certificate included in the request for a subscription profile, at step 218, using the public key of the second server 150.
At a step 219, the generated permanent subscription profile is transmitted from the subscription manager server 160 to the secure element 114.

At a step 220, the secure element 114 stores the subscription profile for further use. A permanent IMSI is therefore remotely provisioned to the secure element 114, which can access to a mobile network using the stored subscription profile.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method for obtaining credentials required for Remote Subscriber Identify Module Provisioning, RSP, of a secure element (114) cooperating with a terminal (100), the method comprising:
- sending (202), by the secure element via a telecommunication interface of the terminal, a request to a first remote server (140) on a signaling channel of a mobile network;
- receiving (209), by the secure element, a temporary subscriber identity after sending of the request;
- obtaining (211; 215) said credentials, wherein at least one of the credentials is obtained from a second remote server (150), using the temporary subscriber identity;
- requesting (217), from a subscription manager server (160), a subscriber profile associated with a permanent subscriber identity, using RSP based on said obtained credentials.

2. The method according to claim 1, wherein the request is sent (202) to the first remote server (140) using an ephemeral subscriber identity, wherein the secure element (114) randomly selects (201) the ephemeral subscriber identity in a predetermined set of ephemeral subscriber identities.

3. The method according to claim 1 or 2, wherein, in response to the request, the secure element (114) receives (205) a unique identifier request from the first remote server (140), and the secure element transmits (207) a unique identifier associated with the secure element to the first remote server, wherein the temporary subscriber identity is received (209) from the first remote server after transmission of the unique identifier.

4. The method according to one of the preceding claims, wherein the credentials comprises a pair of cryptographic keys associated with the secure element (114) and a certificate, wherein the certificate is generated by the second remote server (150) and received by the secure element from the second remote server.

5. The method according to claim 4, wherein the pair of cryptographic keys is generated by the secure element (114) and comprises a private key and a public key.

6. The method according to claim 5, wherein the generated public key is transmitted (212) to the second server (150) to obtain the certificate, and wherein the certificate is encrypted by the second remote server using the public key associated with the secure element (114).

7. The method according to one of the preceding claims, wherein the temporary subscriber identity is valid during a first period.

8. The method according to claim 2 and 7, wherein the ephemeral subscriber identity is valid during a second period, wherein the second period is shorter than the first period.

9. A method according to one of the preceding claims wherein said secure element (114) is an integrated Universal Integrated Circuit Card, iUICC.

10. A method according to one of claims 1 to 8, wherein said secure element (114) is an embedded Universal Integrated Circuit Card, eUICC.

11. A secure element (114) arranged to cooperate with a terminal (114), the secure element being configured for:
- sending a request to a first remote server (140) on a signaling channel of a mobile network;
- receiving a temporary subscriber identity after sending of the request;
- obtaining credentials required for Remote Subscriber Identify Module Provisioning, RSP, wherein the secure element is configured to obtain at least one of the credentials from a second remote server (150), using the temporary subscriber identity;
- requesting, from a subscription manager server (160), a subscriber profile associated with a permanent subscriber identity, using RSP based on said obtained credentials.
